# EUROPÄISCHE PATENTANMELDUNG

(11) **EP 2 927 291 A1**
(43) Veröffentlichungstag der Anmeldung: **07.10.2015**
(21) Anmeldenummer: 15157745.9
(22) Anmeldetag: 05.03.2015
(51) Int. Cl.: C09D 183/04, C04B 41/49, C04B 41/64, C08G 77/04

(54) **VOC-arme Dialkyl-funktionelle Alkoxysiloxane, Verfahren und deren Verwendung als hydrophobierende Imprägniermittel für mineralische Baustoffe**

(30) Priorität: 03.04.2014 DE 102014206359
(71) Anmelder: Evonik Degussa GmbH, 45128 Essen (DE)
(72) Erfinder: Studte, Christopher, 79106 Freiburg (DE); Ljesic, Spomenko, 79618 Rheinfelden (DE)

(57) **Zusammenfassung**

Die Erfindung betrifft VOC-arme Zusammensetzungen von Dialkyl-funktionellen Siloxan-Oligomeren, insbesondere von Methylalkylalkoxysiloxanen, Verfahren zu deren Herstellung sowie deren Verwendung zur Hydrophobierung von porösen mineralischen Substraten bei der wenig bzw. keine flüchtige organische Verbindungen freigesetzt werden.

## Beschreibung

Die Erfindung betrifft VOC-arme/freie Zusammensetzungen von Dialkyl-funktionellen Alkoxysiloxan-Oligomeren, insbesondere von Methylalkylalkoxysiloxanen, Verfahren zu deren Herstellung sowie deren Verwendung zur Hydrophobierung von porösen mineralischen Substraten bei der wenig bzw. keine flüchtigen organischen Verbindungen freigesetzt werden.

Es ist lange bekannt, dass alkylfunktionelle Silane und Siloxane hydrophobierende Eigenschaften auf porösen mineralischen Substraten wie z. B. Beton, Ziegel, Kalksandstein erzeugen können, um nur einige Beispiele zu nennen. So zeichnen sich insbesondere monomere, kurzkettige Alkylalkoxysilane, welche lösungsmittelfrei eingesetzt werden (EP 0 101 816 B1) und niederviskose Alkylalkoxysiloxane, welche einen Oligomerisationsgrad von 3 - 6 aufweisen (DE100 56 344 A1), durch gute Tiefenimprägnierung aus.

Es ist bekannt, dass monomere Alkylalkoxysilane bei der Anwendung eine bestimmte Menge von flüchtigen organischen Verbindungen freisetzen. Der VOC-Gehalt (VOC steht für "volatile organic compounds") kann reduziert werden, wenn oligomere Silansysteme, wie z. B. Alkylalkoxysiloxane, eingesetzt werden. Diese haben Vorteile hinsichtlich ihrer Verwendung als Hydrophobierungsmittel, da sie bei der Anwendung weniger flüchtige organische Verbindungen freisetzen als monomere Silansysteme. Diese Silansysteme haben den Nachteil, dass sie etwas niedrigere Eindringtiefe erreichen. Außerdem können hochviskose Hydrophobierungsmittel zur Verfärbung bzw. Abdunkelung der Substratoberfläche oder zu glänzenden bzw. öligen Oberflächen, besonders bei sehr dichten Substraten wie z. B. Sichtbeton, führen.

Ferner ist bekannt, dass Bautenschutzmittel in Form einer Lösung oder einer flüssigen oder pastösen bzw. cremeartigen Form, d. h. als hochviskose Emulsion angewendet werden (u. a. EP 0 814 110, EP 1 205 481, EP 1 205 505, WO 06/081892; DE1020005004871). Beim Einsatz von wässrigen Emulsionen und hochviskosen Pasten, welche auf Alkylalkoxysilanen, Alkylalkoxysiloxanen oder deren Abmischungen basieren, entstehen nach dem Brechen der Emulsion bzw. Paste und Hydrolyse ebenfalls Alkohole, welche in die Umgebung als VOC abgegeben werden.

Silikonöle und deren Lösungen, welche als eine der ersten Hydrophobierungsmittel zum Schutz vor dem Eindringen von Wasser und in Wasser gelösten Schadstoffen auf mineralischen Substraten eingesetzt wurden, weisen zwar einen niedrige VOC-Gehalt auf, zeigen jedoch keine Reaktivität mit dem Substrat und erreichen nur sehr geringe Eindringtiefen. Sie führen zudem zu Abdunkelungen und klebrigen Oberflächen.

In den letzten Jahren wurden die Emissionsrichtlinien in vielen Teilen der Welt verschärft. So wird z.B. in einem Teil des Bundesstaates Kalifornien in den USA, ein VOC-Gehalt von kleiner 100 g/L für Bautenschutzmittel gefordert. Es ist davon auszugehen, dass sich diese oder ähnliche Richtlinien auch in weiteren Teilen der USA und dem Rest der Welt durchsetzen werden.

EP 0 579 453B1 beschreibt ein Verfahren zur Herstellung einer Mischung aus monomeren Alkoxysilanen, alkoxyfunktionellen Siloxanen und Silanolen und deren Verwendung zur Hydrophobierung von Baustoffen. Die beschriebenen, teil- vorhydrolysierten Mischungen, setzen bei Kontakt mit Feuchtigkeit und vollständiger Hydrolyse deutlich weniger Alkohole frei.

EP 0 814 110 B1 lehrt ein Verfahren zur Herstellung von oligomeren Gemischen aus kondensierten Alkylalkoxysiloxanen, welche weniger VOC freisetzen. Auch diese VOC-ärmeren Alkylalkoxysilanol-Oligomere wurden insbesondere für die Hydrophobierung mineralischer Oberflächen entwickelt. Die hieraus erhaltenen Produkte, hergestellt unter Zusatz von 1,2 mol H₂O/mol Si führen bei Auftrag auf dichten Substraten wie z. B. Sichtbeton zur Verdunkelung der Substratoberfläche und zeigen niedrige Eindringtiefen.

EP 1 205 481 B1 offenbart ein Oligomeren-Gemisch aus n-Propylethoxysiloxanen mit unterschiedlichen Oligomerisationsgraden, hergestellt unter Zusatz von 0,65-0,85 mol H₂O/mol Si und deren Verwendung für die Behandlung von mineralischen Substraten. Die Eindringtiefe wurde lediglich auf Kalksandstein getestet, der deutlich poröser als Beton ist.

US 5,112,393 beschreibt eine Methode zur Hydrophobierung von Mauerwerk mit VOC-armen Organoalkoxysilanen, wobei der VOC-Gehalt des erfindungsgemäßen Produktes 220 g/L beträgt.

WO 2013/043725 offenbart eine Emulsion aus cyclischen Methyl Siloxanen mit einem VOC-Gehalt < 100 g/L. Eine Angabe zum getesteten Substrat wurde jedoch nicht gemacht, so dass nicht ersichtlich ist, ob die Prüfungen auf Betonplatten (0051) oder auf Mörtelwürfeln (0052) durchgeführt wurden.

EP 0 538 555 A1 offenbart n-Octyltrialkoxysilan enthaltende wässrige Emulsionen zur Imprägnierung mineralischer Baustoffe. Der VOC-Gehalt liegt bei größer 300 g/L. Auch die EP 0 340 816A2 und EP 0 412 515A1 offenbaren Emulsionen von n-Octyltriethoxysilan enthaltenden Emulsionen. Bedingt durch die drei Ethoxy-Gruppen je Silanmolekül beträgt der VOC-Gehalt bei 350 g/L.

DE 28 49 108 offenbart Octylmethylcyclotetrasiloxan im Zusammenhang mit der Herstellung von Silylphosphaten. Ein Verfahren zur Herstellung der Octylmethylcyclotetrasiloxane wird nicht offenbart.

Bei der vorliegenden Erfindung lag die Aufgabe zugrunde, eine Zusammensetzung bereitzustellen, welche beim Abbinden sehr wenig flüchtige, organische Substanzen freisetzt. Darüber hinaus sollen sich die erfindungsgemäßen Zusammensetzungen in hervorragender Weise zur Hydrophobierung von mineralischen Substraten eignen. Vorteilhaft sollen dabei geringe oder deutlich geringere Mengen an Alkoholen durch das Abbinden bilden und so in die Umgebung entweichen. Ferner sollen die Zusammensetzungen keine oder nur geringe Verfärbungen an den behandelten Substraten hervorrufen.

Unter Abbinden wird vorliegend die mögliche Reaktion von Alkoxy-Silyl- oder Hydroxy-Silyl-Gruppen mit anderen Reaktionspartnern, wie beispielsweise mit reaktiven Gruppen der behandelten Substrate oder Materialien verstanden. So können reine Silicone ohne reaktive Alkoxy- oder Hydroxy-Gruppen nicht mit einem Substrat abbinden. Daher werden reine Silicone auch witterungsbedingt von den behandelten Substraten leichter abgewaschen.

Die Aufgaben werden erfindungsgemäß durch die Zusammensetzung nach Anspruch 1 sowie durch das Verfahren nach Anspruch 11 und die Formulierungen nach Anspruch 18 gelöst. Gleichfalls werden die Aufgaben durch die Verwendung nach Anspruch 20 gelöst. Besondere Ausgestaltungen der Erfindung und bevorzugte Ausführungsformen sind in den Unteransprüchen und in der Beschreibung detailliert erläutert.

Es wurde überraschend gefunden, dass aus Dialkyldichlorsilanen, insbesondere aus Octylmethyldichlorsilan, durch eine kontrollierte Veresterungs- und Kondensationsreaktion mit einem Ethanol-Wasser-Gemisch und nachfolgender destillativer Entfernung des Hydrolyse- und Überschussalkohols unter vermindertem Druck, ein niedrigviskoses reaktives Dialkyl-Siloxan, vorzugsweise Octylmethylsiloxan bzw. Gemisch an Octylmethylsiloxanen erhalten wird, dessen Gehalt an Alkoxy-Gruppen bzw. an VOC durch die Mengen an Wasser pro mol Si eingestellt werden kann.

Überraschenderweise wurde gefunden, dass Methylalkyldiethoxysiloxane neben sehr guten hydrophobierenden Eigenschaften, eine hohe Reaktivität sowie Alkalistabilität im bzw. auf dem Substrat aufweisen und nur sehr geringe Mengen an VOC freisetzen. Die nach dem erfindungsgemäßen Verfahren erhaltenen Zusammensetzungen sind homogene, klare bis opalisierende niederviskose lagerstabile Flüssigkeiten und können entweder alleine oder in Verbindung mit monomeren Alkylsilanen und/oder Lösemitteln eingesetzt werden.

Die Viskosität (20 °C) nach DIN 53015 der erfindungsgemäßen Zusammensetzungen liegt vorzugsweise zwischen 1 mPa·s bis 200 mPa·s, insbesondere von 1 mPa·s bis 50 mPa·s, vorteilhaft von 2 mPa·s bis 30 mPa·s, bevorzugt von 3 mPa·s bis 20 mPa·s, besonders bevorzugt von 3 mPa·s bis 10 mPa·s oder 11 mPa·s bis 30 mPa·s.

Der Gehalt an Verdünnungsmittel, insbesondere freiem Alkohol in der Zusammensetzung beträgt vorzugsweise kleiner 5 Gew.-% in Bezug auf die Gesamtzusammensetzung, bevorzugt kleiner 1 Gew.-%, besonders bevorzugt kleiner 1 Gew.-% oder kleiner 0,1 bis 0,0 Gew.-% hin zur Nachweisgrenze.

Gegenstand der vorliegenden Erfindung ist vorzugsweise eine Zusammensetzung zur Hydrophobierung poröser mineralischer Substrate, welches bei der Anwendung sehr wenig flüchtige organische Verbindungen freisetzt und dessen Viskosität (20 °C) kleiner gleich 50 mPa·s beträgt und hierdurch eine sehr gute Tiefenimprägnierung ermöglicht.

Darüber hinaus zeichnen sich die erfindungsgemäßen Zusammensetzungen durch eine sehr gute Reduktion der Wasseraufnahme eines damit behandelten mineralischen Substrates und einer hohen Eindringtiefe bei gleichzeitig sehr geringem VOC-Gehalt aus. Als eine hohe Eindringtiefe auf Beton werden größer gleich 2 mm in Beton EN 196 CEM I 42,5; w/z-Wert = 0,5 verstanden. Dabei bleibt das Erscheinungsbild des behandelten Substrats durch die Behandlung nahezu unverändert.

In diesem Sinne können erfindungsgemäße Zusammensetzungen besonders vorteilhaft zum Hydrophobieren von porösen mineralischen Substraten, vorzugsweise silikatischen Materialien, insbesondere Baustoffen wie Beton, Faserzement, Ton, Ziegel, Marmor, Granit, Sandstein oder Kalksandstein, um nur einige Beispiele zu nennen, verwendet werden.

Gegenstand der Erfindung sind Zusammensetzungen umfassend Dialkyl-funktionelle Siloxan-Oligomere, insbesondere zum Imprägnieren mineralischer Baustoffe an der Oberfläche und/oder in der Masse, wobei die Dialkyl-funktionellen Siloxan-Oligomere der allgemeinen Formel I entsprechen 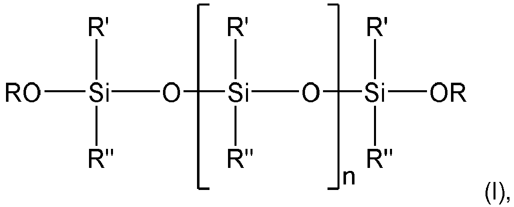 worin
- R' jeweils unabhängig eine lineare, verzweigte oder cyclische Alkyl-Gruppe mit 3 bis 8 C-Atomen ist, bevorzugt ist eine Alkyl-Gruppe mit 8 C-Atomen, insbesondere eine Octyl-Gruppe,
- R" jeweils unabhängig eine Alkyl-Gruppe mit 1 bis 3 C-Atomen, insbesondere eine Methyl-, Ethyl-, iso-Propypyl- oder n-Propyl-Gruppe, bevorzugt eine Methyl-Gruppe und
- R jeweils unabhängig eine Alkylgruppe mit 1 bis 3 C-Atomen, oder ein Wasserstoff ist, wobei die Gruppen R gleich oder verschieden sind, bevorzugt ist R eine Methyl- oder Ethyl-Gruppe, und
- n ist gleich eine ganze Zahl von 0 bis 10, insbesondere 0, 1, 2, 3, 4, 5, bevorzugt 1 oder 2, oder ein Gemisch von Dialkyl-funktionellen Siloxan-Oligomeren. Besonders bevorzugt ist für R', jeweils unabhängig, eine lineare, verzweigte oder cyclische Alkyl-Gruppe mit 3, 4, 5, 6, 7 oder 8 C-Atomen.

In den Zusammensetzungen kann vorzugsweise n im Mittel eine Zahl zwischen 1 bis 5 sein, wie n im Mittel gleich 1,1 bis 1,8, insbesondere ist n im Mittel um 1,3 bis 1,5.

Bevorzugte Zusammensetzungen umfassen Alkylmethylalkoxysiloxane der Formel I, insbesondere reaktive Alkylmethylsiloxane, bevorzugt Octylmethylethoxysiloxane, mit n gleich 0, 1, 2, 3, 4 oder 5. Als reaktiv gilt ein Siloxan, wenn es über mindestens eine reaktive Alkoxy-Gruppe und/oder über mindestens eine reaktive Hydroxy-Gruppe verfügt.

Gleichfalls Gegenstand der Erfindung sind Zusammensetzungen mit mindestens einem Dialkyl-funktionellen Siloxan-Oligomer der allgemeinen Formel I mit R' gleich eine lineare oder verzweigte Octyl-Gruppe, insbesondere n-Octyl und/oder iso-Octyl-Gruppe, R" eine Methyl-Gruppe und R eine Alkyl-Gruppe mit 1 bis 2 C-Atomen oder ein Wasserstoff, wobei die Gruppen R gleich oder verschieden sein können, mit n gleich eine ganze Zahl von 0 bis 10, insbesondere ist n gleich 0, 1, 2, 3, 4 oder 5, bevorzugt ist n eine ganze Zahl von 1 bis 5, besonders bevorzugt ist n gleich 1 oder 2. Bevorzugt sind Oligomere mit zwei bis vier Silyl-Einheiten.

Besonders bevorzugt sind Dialkyl-funktionellen Siloxan-Oligomer der allgemeinen Formel I, wobei R' ausgewählt ist aus n-Octyl- und 2,2,4-Trimethylpentyl- (iso-Octyl-) und R" eine Methyl-Gruppe und R eine Methyl- oder Ethyl-Gruppe ist, bevorzugt ist Ethyl. Ebenfalls besonders bevorzugt sind Siloxan-Oligomere der allgemeinen Formel I, wobei R' ausgewählt ist aus iso-Butyl- und n-Propyl- und R" eine Methyl-Gruppe und R eine Methyl- oder Ethyl-Gruppe ist, bevorzugt ist Ethyl.

Nach einer Alternative sind ebenfalls Gegenstand der Erfindung Zusammensetzungen mit mindestens einem Dialkyl-funktionellen Siloxan-Oligomer der allgemeinen Formel I, wobei R' ausgewählt ist aus Propyl-, n-Propyl-, i-Propyl-, Butyl- iso-Butyl-, n-Butyl-, tert-Butyl-, n-Octyl-, 2-Methylheptyl-, 3-Methylheptyl-, 4-Methylheptyl-, 2,2-Dimethylhexyl-, 2,3-Dimethylhexyl-, 2,4-Dimethylhexyl-, 2,5-Dimethylhexyl-, 3,3-Dimethylhexyl-, 3,4-Dimethylhexyl-, 3-Ethylhexyl-, 2,2,3-Trimethylpentyl-, 2,2,4-Trimethylpentyl- (iso-Octyl-), 2,3,3-Trimethylpentyl-, 2,3,4-Trimethylpentyl-, 3-Ethyl-2-methylpentyl- und 3-Ethyl-3-methylpentyl-, 2,2,3,3-Tetramethylbutyl-, Cycloheptylethylen-, Methylcyclohexylmetylen-, Cycloheptylmethylen- und Methylcycloheptyl. Ferner kann R' ausgewählt sein aus linearen, cyclischen und/oder verzweigten Isomeren aus Pentyl-, Hexyl- und Heptyl-.

Ebenfalls Gegenstand der Erfindung sind Zusammensetzungen umfassend Dialkyl-funktionelle Siloxan-Oligomere als Gemisch von Dialkyl-funktionellen linearen Siloxan-Oligomeren der allgemeinen Formel I. Alternativ ebenfalls bevorzugt sind Zusammensetzungen umfassend Gemische von Dialkyl-funktionellen linearen Siloxan-Oligomere der Formel I mit Dialkyl-funktionellen cyclischen Siloxan-Oligomeren der allgemeinen Formel II.

Ferner sind Gegenstand der Erfindung Zusammensetzungen umfassend Dialkyl-funktionelle Siloxan-Oligomere im Gemisch mit Dialkyl-funktionellen cyclischen Siloxan-Oligomeren der allgemeinen Formel II, 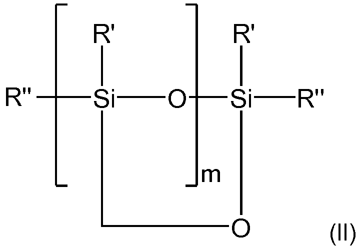 worin
- R' in Formel II jeweils unabhängig eine lineare oder verzweigte Alkyl-Gruppe mit 3 bis 8 C-Atomen ist, vorzugsweise ist R' eine Alkyl-Gruppe mit 8 C-Atomen, insbesondere eine Octyl-Gruppe,
- R" in Formel II jeweils unabhängig eine Alkylgruppe mit 1 bis 3 C-Atomen sind, insbesondere ist R" eine Methyl-, Ethyl-, iso-Propypyl- oder n-Propyl-Gruppe, und
- m gleich eine ganze Zahl von 2 bis 10 ist, insbesondere ist m gleich 2, 3, 4 oder 5, bevorzugt ist m gleich 2, 3 oder 4.

Darüber hinaus kann R', wie vorstehend definiert, ein Isomer einer Alkyl-Gruppe mit 8 C-Atomen sein. Zudem kann R' jeweils unabhängig eine lineare, verzweigte oder cyclische Alkyl-Gruppe mit 3, 4, 5, 6 oder 7 C-Atomen sein.

Entsprechend einer weiteren Alternative werden Zusammensetzungen beansprucht, die Dialkyl-Siloxan-Oligomere der Formel I und II im molaren Verhältnis von 100 zu 1 bis 1 zu 100, insbesondere von 10 zu 1 bis 1 zu 10 umfassen. Nach einer besonders bevorzugten Alternative umfasst eine erfindungsgemäße Zusammensetzung die Dialkyl-Siloxan-Oligomere der Formel I und II im molaren Verhältnis von 1 zu 100 bis 1 zu 1.

Nach einer weiteren bevorzugten Alternative werden Zusammensetzungen beansprucht, die die Dialkyl-Siloxan-Oligomere der Formel I und optional der Formel II mit einem Gehalt von 0,01 bis 99,9 Gew.-% in der Zusammensetzung aufweisen. Der Gehalt der Siloxan-Oligomere in den Zusammensetzungen kann beliebig verändert werden und an die jeweilige Anwendung angepasst werden. Entsprechend einer bevorzugten Alternative umfasst eine Zusammensetzung größer 90 Gew.-% an cyclischen Dialkyl-Siloxan-Oligomere der Formel II, insbesondere größer gleich 95 Gew.-%, bevorzugt größer gleich 98 Gew.-%, besonders bevorzugt größer gleich 99 Gew.-%, und optional auf 100 Gew.-% an Siloxanen, insbesondere in der Gesamtzusammensetzung, zudem lineare Dialkyl-Siloxan-Oligomere der Formel I. Bevorzugt ist eine Zusammensetzung, die Dialkyl-Siloxan-Oligomere mit m = 3 aufweist, insbesondere mit einem Gehalt von größer gleich 90 Gew.-% bis 99,9 Gew.-% in Bezug auf die Zusammensetzung, wobei bevorzugt 0,1 bis 10 Gew.-% an Siloxan-Oligomeren der allgemeinen Formel II auf einen Gehalt an Siloxanen von 100 Gew.-% enthalten sind. Entsprechend einer weiteren Alternative umfasst eine Zusammensetzung kleiner gleich 50 Gew.-% an cyclischen Siloxan-Oligomeren der Formel II, insbesondere kleiner gleich 30 Gew.-%, bevorzugt kleiner gleich 20 Gew.-%, besonders bevorzugt kleiner gleich 10 Gew.-%, und auf 100 Gew.-% an Siloxanen, zudem lineare Siloxan-Oligomere der Formel I. Bevorzugt werden die 100 Gew.-% in Bezug auf die Gesamtzusammensetzung betrachtet. Der jeweils bevorzugte Gehalt hängt von der Anwendung ab, so liegt der Gehalt bei für mineralische Anwendungen vorzugsweise bei 75 bis 95 Gew.-% Siloxane der Formel II und 5 bis 25 Gew.-% an Siloxan-Oligomeren der Formel I.

Alternativ bevorzugte Zusammensetzungen umfassen größer 90 Gew.-% an linearen Dialkyl-Siloxan-Oligomere der Formel I, insbesondere größer gleich 95 Gew.-%, bevorzugt größer gleich 98 Gew.-%, besonders bevorzugt größer gleich 99 Gew.-%, und optional auf 100 Gew.-% cyclische Dialkyl-Siloxan-Oligomere der Formel II in Bezug auf 100 Gew.-% an Siloxanen, insbesondere in Bezug auf die Gesamtzusammensetzung. Nach einer weiteren bevorzugten Alternative umfassen diese Zusammensetzungen lineare Dialkyl-Siloxan-Oligomere mit n = 1 oder 2.

Die linearen Dialkyl-Siloxan-Oligomere mit n = 1 oder 2 liegen vorzugsweise mit größer gleich 10 Gew.-% in der Zusammensetzung in Bezug auf die Siloxane, vorzugsweise in Bezug auf die Gesamtzusammensetzung vor, bevorzugt mit größer gleich 50 Gew.-%, besonders bevorzugt mit größer gleich 80 Gew.-%, vorzugsweise mit größer gleich 90 Gew.-%.

Ein besonderer Vorteil der erfindungsgemäßen Zusammensetzungen ist ihr geringer VOC-Gehalt, der für die Dialkyl-Siloxan-Oligomere mit n = 1 bis 2, deren Oligomere im Mittel einen Oligomerisierungsgrad (Oligomerisierungsgrad = n*) von 3 bis 4, vorzugsweise von 3,2 bis 3,6, besonders bevorzugt von 3,3 bis 3,5 aufweisen, bei Zusammensetzungen mit einem Gehalt von 98 bis 100 Gew.-% an Dialkyl-Siloxanen für C8-Alkyl-Methyl-Siloxane zwischen 66 bis 72 g/L für lineare Siloxane beträgt. Als Oligomerisierungsgrad wird die Anzahl an Silizium-Atomen bzw. Silyl-Gruppen im Siloxan verstanden. Bei Abmischungen von linearen Oligomeren mit cyclischen Siloxanen, die keine reaktionsfähigen terminalen Alkoxy-Gruppen aufweisen, kann der VOC-Gehalt weiter gesenkt werden. In Abmischungen von Alkoxy- und Hydroxy-funktionellen Siloxanen mit cyclischen Siloxanen der Formel II kann der VOC-Gehalt von größer 300 g/L in Siloxan-Oligomeren mit einem Gehalt größer gleich 98 Gew.-% durch Zugabe von cyclischen Siloxan-Oligomeren der Formel II auf unter 150 g/L, bevorzugt auf unter 100 g/L gesenkt werden

Optimale Ergebnisse bezüglich einer guten Eindringtiefe in die porösen mineralischen Baustoffe, bei möglichst geringem VOC-Gehalt und zugleich guten Werten einer reduzierten Wasseraufnahme, werden mit linearen Siloxanen der n-Octylmethyl-Siloxane mit einem Oligomererisierungsgrad (n*) von 3,5 erzielt, d.h. die Indices n liegen zwischen 1 und 2, mit n im Mittel um 1,5. Die Reduktion der Wasseraufnahme kann auf 92 bis 96 % gesteigert werden. Mit reinen cylischen Siloxanoligomeren können die geringsten VOC-Gehalte erzielt werden, doch die Reduktion der Wasseraufnahme beträgt 40 %.

Zusammensetzungen, die zusätzlich zu den Siloxanen der Formeln I und optional der Formel II auch Organosilane oder -siloxane der Formel IV umfassen, zeigen die besten Ergebnisse bezüglich der Eindringtiefe, geringe VOC-Gehalte und gute Ergebnisse bei der Reduktion der Wasseraufnahme, wie das Beispiel 7 aufzeigt.

Gegenstand der Erfindung sind auch Zusammensetzungen umfassend zusätzlich zu dem mindestens einem Dialkyl-Siloxan-Oligomer der Formel I zudem mindestens ein Organosilan oder -siloxan der allgemeinen Formel IV

R¹-Si(O)_{y}R²_{z} (IV),

worin
- R¹ eine lineare, verzweigte oder cyclische Alkyl-Gruppe mit 3 bis 20 C-Atomen, insbesondere mit 3 bis 8 C-Atomen, vorzugsweise Propyl-, Butyl, Pentyl, Hexyl-, Heptyl, Octyl-,
- R² jeweils unabhängig eine lineare oder verzweigte Alkoxy-Gruppe mit 1 bis 4 C-Atomen, insbesondere 1 bis 2 C-Atome, oder eine Hydroxy-Gruppe, wobei die Gruppen R² gleich oder verschieden sein können, insbesondere ist R² Methyl- oder Ethyl-, mit
- y gleich 0 bis 1,5
- z gleich 0, 1, 2 oder 3 und, wobei y = 1,5 bei z = 0, y = 1 bei z = 1, y = 0,5 bei z = 2 und y = 0 bei z = 3 sind, oder
   ein Gemisch daraus.

Bevorzugte Siloxane der Formel IV umfassen R¹-Si(O_{1/2})(R²)₂, R¹-Si(O_{1/2})₂(R²). Bevorzugte Silane der Formel IV sind R¹-Si(R²)_{3.}

Nachfolgend sind bevorzugte Organosilane der Formel IV genannt, die in der erfindungsgemäßen Zusammensetzung eingesetzt werden können sowie auch deren zumindest teilweisen Hydrolyse- und/oder Kondensationsprodukte:
n-C3H7Si(OCH3)3, n-C3H7Si(OC2H5)3, i-C3H7Si(OCH3)3, i-C3H7Si(OC2H5)3,
n-C4H9Si(OCH3)3, n-C4H9Si(OC2H5)3, i-C4H9Si(OCH3)3, i-C4H9Si(OC2H5)3,
n-C5H11Si(OCH3)3, n-C5H11Si(OC2H5)3, i-C5H11Si(OCH3)3,
i-C5H11Si(OC2H5)3, n-C6H13Si(OCH3)3, n-C6H13Si(OC2H5)3,
i-C6H13Si(OCH3)3, i-C6H13Si(OC2H5)3, n-C8H17Si(OCH3)3,
n-C8H17Si(OC2H5)3, i-C8H17Si(OCH3)3, i-C8H17Si(OC2H5)3,
n-C10H21Si(OCH3)3, n-C10H21Si(OC2H5)3, i-C10H21Si(OCH3)3,
i-C10H21Si(OC2H5)3, n-C16H33Si(OCH3)3, n-C16H33Si(OC2H5)3,
i-C16H33Si(OCH3)3, i-C16H33Si(OC2H5)3 oder Partialkondensate aus einem oder mehreren der genannten Alkylalkoxysilane oder ein Gemisch aus den genannten Alkylalkoxysilanen, ein Gemisch aus den Partialkondensaten oder ein Gemisch aus Alkylalkoxysilanen und Partialkondensaten.

Gegenstand der Erfindung sind auch Zusammensetzungen sowie die Verwendung dieser Zusammensetzungen umfassend zusätzlich zu dem mindestens einem Dialkyl-Siloxan-Oligomer der Formel II, vorzugsweise mit R' gleich eine Alkyl-Gruppe mit 8 C-Atomen, und mindestens ein Silan der allgemeinen Formel III

R'-SiR"(X)₂ (III),

worin
- R' eine lineare oder verzweigte Alkyl-Gruppe mit 8 C-Atomen, insbesondere eine Octyl-Gruppe,
- R" eine Alkylgruppe mit 1 bis 3 C-Atomen sind, insbesondere Methyl-, Ethyl-, isoPropyl- oder n-Propyl-Gruppe, und
- X jeweils unabhängig ausgewählt ist aus Halogen, -OR und -OH, wobei die Gruppen R gleich oder verschieden sind und R eine Alkylgruppe mit 1 bis 2 C-Atomen ist.

Gegenstand der Erfindung ist auch die Verwendung von Zusammensetzungen umfassend mindestens ein Dialkyl-Siloxan-Oligomer der Formel II, insbesondere mit m = 3, zur Hydrophobierung von Substraten, von Oberflächen von Substraten und/oder von Substraten in der Masse. Besonders bevorzugt ist die Verwendung zur Hydrophobierung von mineralischen Baustoffen, wie Ziegel, Beton, Kalksandstein, Putz, oder auch Gips.

Gegenstand der Erfindung ist auch ein Verfahren zur Herstellung von Zusammensetzungen sowie Zusammensetzungen erhältlich nach dem Verfahren, umfassend mindestens ein Dialkyl-funktionelles Siloxan-Oligomer der allgemeinen Formel I, indem
- mindestens ein Silan der allgemeinen Formel III

   R'-SiR"(X)₂ (III),

   worin
   - R' eine lineare oder verzweigte Alkyl-Gruppe mit 8 C-Atomen, insbesondere eine Octyl-Gruppe,
   - R" eine Alkylgruppe mit 1 bis 3 C-Atomen sind, insbesondere Methyl-, Ethyl-, isoPropyl- oder n-Propyl-Gruppe, und
   - X jeweils unabhängig ausgewählt ist aus Halogen, -OR und -OH, wobei die Gruppen R gleich oder verschieden sind und R eine Alkylgruppe mit 1 bis 2 C-Atomen ist, und
   - in Gegenwart eines Verdünnungsmittels oder Reaktionsmittels und einer definierten Menge Wasser bezogen auf die Silizium-Atome der Silane der Formel III hydrolysiert und kondensiert werden, und optional das Verdünnungsmittel oder Reaktionsmittel entfernt wird.

Entsprechend einer bevorzugten Verfahrensvariante ist X gleich Halogen, mit Halogen ausgewählt aus Chlor und Brom. Besonders bevorzugt ist Halogen gleich Chlor. Dabei ist es besonders bevorzugt, wenn zur Hydrolyse- und/oder Kondensation kein Katalysator zugesetzt wird.

Gegenstand der Erfindung ist auch ein Verfahren zur Herstellung von Zusammensetzungen sowie Zusammensetzungen erhältlich nach dem Verfahren, insbesondere umfassend Siloxan-Oligomere der Formel II.

Das Verfahren wird bevorzugt mit einer definierten Menge Wasser bezogen auf Mol der Silizium-Atome der Silane der Formel III durchgeführt, wobei vorzugsweise 0,3 bis 1,0 mol Wasser je Mol Silizium-Atome der Silane der Formel III (mol H₂O/mol Si) zugesetzt werden oder in der Zusammensetzung vorliegen und ggf. zumindest zum Teil über das Verdünnungsmittel zugesetzt werden. Bevorzugt sind 0,3 bis 0,9 mol Wasser bezogen auf ein Mol Silizium-Atome (mol H₂O/mol Si), bevorzugt 0,4 bis 0,8 mol H₂O/mol Si, besonders bevorzugt 0,4 bis 0,6 mol H₂O/mol Si, weiter bevorzugt 0,4 bis 0,6 mol H₂O/mol Si, insbesondere mit einer Schwankung von plus/minus 0,25 mol, bevorzugt von plus/minus 0,1 mol. Alternativ werden 0,4 mol H₂O/mol Si, 0,5 mol H₂O/mol Si, 0,6 mol H₂O/mol Si, 0,7 mol H₂O/mol Si, 0,8 mol H₂O/mol Si insbesondere jeweils mit einer Schwankungsbreite von plus/minus 0,25 mol in Bezug auf das Wasser zugesetzt.

Nach einer besonders bevorzugten Alternative wird als Verdünnungsmittel oder Reaktionsmittel ein Alkohol, wässriger Alkohol oder Alkoholgemisch in dem Verfahren eingesetzt. Vorteilhaft ist das Verdünnungsmittel ein Alkohol, insbesondere Methanol, Ethanol oder ein Gemisch enthaltend mindestens einen Alkohol und optional mit einem definierten Gehalt an Wasser. Übliche Alkohole wie u.a. Propanol, Butanol sind dem Fachmann geläufig. In Verfahren, in denen mindestens ein Silan der Formel III mit X gleich Halogen, insbesondere Chlor, eingesetzt wird ist der Alkohol ein Reaktionsmittel.

Gleichfalls kann das Verfahren nach einer Alternative mit mindestens einem Silan der Formel III mit
a) X gleich -OR oder -OH oder b) X gleich -OR und optional ein Gehalt an -OH-Gruppen, durchgeführt werden, wobei die Gruppen R gleich oder verschieden sind und R eine Alkylgruppe mit 1 bis 2 C-Atomen ist. Das Verfahren kann auch mit einer definierten Mischung von Silanen der Formel III durchgeführt werden deren Gruppen X nach Alternative a) X jeweils -OR und Chlor oder
b) X jeweils -OH und -OR umfassen.

Ebenfalls Gegenstand der Erfindung ist ein Verfahren, in dem die Hydrolyse und/oder Kondensation in Gegenwart eines Katalysators erfolgt, insbesondere wird der Katalysator nach der Hydrolyse und/oder Kondensation aus der Zusammensetzung entfernt. Bevorzugte Katalysatoren sind saure Katalysatoren, wie anorganische Säuren, organische Carbonsäuren, vorzugsweise flüchtige Säuren, wie HCl, Ameisensäure, Essigsäure, Milchsäure, die durch definierte Bedingungen in einer Destillation zumindest teilweise abgetrennt werden können. In Verfahrensalternativen in denen kein Chlorwasserstoff zugegen ist, kann es sinnvoll sein zur Durchführung des Verfahrens einen Katalysator zuzusetzen.

Das Verfahren wird vorzugsweise in einem definierten Temperaturbereich durchgeführt. So erfolgt die Hydrolyse und/oder Kondensation in dem Verfahren vorzugsweise im Temperaturbereich von 25 bis 80 °C, insbesondere über einen Zeitraum von 10 Minuten bis 10 Stunden, vorzugsweise zwischen 30 Minuten und 2 Stunden, besonders bevorzugt etwa für eine Stunde, und das Verdünnungsmittel, insbesondere der Alkohol, und/oder das Wasser werden vorzugsweise anschließend im Vakuum bei einer Temperatur der Zusammensetzung von kleiner gleich 70 °C, wie der Sumpftemperatur, aus der Zusammensetzung entfernt. Vorzugsweise erfolgt die Abtrennung von Verdünnungsmittel als Azeotrop mit Wasser. Bevorzugt erfolgt die Abtrennung des Verdünnungsmittels bei einer Temperatur der Zusammensetzung von kleiner gleich 60 °C.

Eine besonders bevorzugte Verfahrensvariante wird nachfolgend beschrieben, wobei das Verfahren die Schritte umfasst
- Vorlegen des mindestens einen Silans der allgemeinen Formel III,
- a) Zugabe des Verdünnungsmittels oder Reaktionsmittels, insbesondere mindestens eines Alkohols, und des Wassers als ein Alkohol/Wasser Gemisch oder b) separate Zugabe des Verdünnungsmittels oder Reaktionsmittels Alkohol und Wasser
- Hydrolyse und/oder Kondensation im Temperaturbereich von 25 bis 80 °C, insbesondere bei kleiner gleich 75 °C, vorzugsweise für 20 Minuten bis 2 Stunden, vorzugsweise zwischen 30 Minuten bis 1,5 Stunden,
- Entfernen des Verdünnungsmittels oder Reaktionsmittels Alkohol und optional Wasser im Vakuum,
   insbesondere bei um 1 mbar und bei einer Temperatur der Zusammensetzung unter 65°C, insbesondere unter 60°C, bspw. der Sumpftemperatur, und optional
- Erhalten der Zusammensetzung.

Die Herstellung der Siloxane kann vorteilhaft auch gemäß EP 0 814 110, EP 1 205 481, EP 1 205 505 erfolgen.

Ebenfalls Gegenstand der Erfindung sind Formulierungen enthaltend eine erfindungsgemäße Zusammensetzung oder eine nach dem erfindungsgemäßen Verfahren erhaltene

Zusammensetzung, umfassend mindestens einen Hilfsstoff und optional Lösemittel und/oder Additive. Die Formulierung kann eine flüssige Formulierung, pulverförmige Formulierung, pastenförmige Formulierung, eine Emulsion, Dispersion oder eine cremeartige Formulierung sein.

So können erfindungsgemäße Zusammensetzungen als Konzentrat, als Verdünnung oder als Ölphase in einer wässrigen niederviskosen bis hochviskosen, pastösen Emulsionen vorliegen und appliziert werden. Die Herstellung wässriger Emulsionen ist aus technischer Sicht beispielsweise in DE 10 2005 004 871 A1 oder EP 0 538 555 B1 ausführlich beschrieben. Ebenso können die erfindungsgemäßen Zusammenfassungen von Dialkyl-funktionellen Alkoxysiloxan-Oligomeren als Formulierungen gemäß den EP 0 814 110, EP 1 205 481, EP 1 205 505 oder WO 06/081892 zubereitet werden.

Zur Verbesserung der Applikationseigenschaften kann das vorliegende Mittel nach bekannten Verfahren auch als wässrige niedrig- oder hochviskose Emulsion formuliert werden, wobei die Viskosität der Wirkstoffkomposition Ölphase - hierbei in der Regel unverändert bleibt. Hierbei wird die Formulierung der Wirkstoffe als wässrige Emulsion dem Beton-Anmachwasser zugesetzt bevorzugt, um eine möglichst homogene Verteilung zu gewährleisten.

Auch kann das erfindungsgemäße Mittel neben den Wirkstoffkomponenten als zusätzliche Komponenten Lösemittel bzw. Lösungsvermittler, wie Mineralöl, Benzinkohlenwasserstoffe, ferner Diisotridecyladipat, Wasser, Emulgatoren, Rheologiehilfsstoffe, gegebenenfalls auch Verdickungshilfsmittel, wie feinteiligen Ton, Fällungskieselsäure, pyrogene Kieselsäure, oder ein entsprechende Gemisch daraus enthalten.

Gegenstand der Erfindung ist auch die Verwendung der Zusammensetzungen zur VOC-armen Hydrophobierung von Oberflächen von Substraten und zur Hydrophobierung von Materialien in der Masse mit einer Reduktion der Wasseraufnahme von größer gleich 30 % und einem VOC-Gehalt von kleiner gleich 100 g/L. Bevorzugte Verwendungen der Zusammensetzungen ermöglichen eine Reduktion der Wasseraufnahme der Substrate von größer gleich 50 % in Bezug auf die unbehandelten Substrate, bevorzugt größer gleich 70 %, besonders bevorzugt größer gleich 90 % und der Freisetzung eines VOC-Gehalts von kleiner gleich 100 g/L, insbesondere kleiner gleich 90 g/L, bevorzugt kleiner gleich 80 g/L, besonders bevorzugt kleiner gleich 75 g/L. Die vorstehenden Angaben beziehen sich auf Zusammensetzungen mit einem Gehalt an Siloxanen von größer gleich 90 Gew.-%, insbesondere von größer gleich 98 Gew.-%, bevorzugt größer gleich 99 Gew.-% in der Gesamtzusammensetzung. Erfindungsgemäß werden unter den Siloxanen die der Formel I und optional der Formel II verstanden sowie alternativ zudem Zusammensetzungen umfassend Siloxane der Formel II mit einem Gehalt an Silanen der Formel III.

Ferner ist Gegenstand der Erfindung die Verwendung von erfindungsgemäßen Zusammensetzungen oder von Zusammensetzungen erhältlich nach einem erfindungsgemäßen Verfahren zur Hydrophobierung von Oberflächen Substraten und zur Hydrophobierung von Materialien in der Masse, zur Hydrophobierung von mineralischen Baustoffen, insbesondere von porösen mineralischen Baustoffen, zur Hydrophobierung von porösen mineralischen Substraten, vorzugsweise silikatischen Materialien, insbesondere Baustoffen wie Beton, Faserzement, Ton, Ziegel, Marmor, Granit, Sandstein oder Kalksandstein, Ziegeln, Estrich, Putz, Gips, zur Hydrophobierung von silikatischen Kompositen, wie Naturstein-/ Quarz-Kompositen, wie sie beispielsweise zur Herstellung von Badkeramiken und/oder Küchenplatten verwendet werden, Keramik, natürlichen Baustoffen, Kompositmaterialien, zur Ausbildung von Wasser- oder Wasserdampfsperren, als Additiv in Mitteln zur Ausbildung von Wasserbarrieren, Holzkomposite, Holzpolymere, (Bohlen, Parkett) als Additiv in Zusammensetzungen umfassend Polymere, in Lacken, als Additiv in Klebstoffen zur Ausbildung von Wasser- und Dampfbarrieren, als Trockenmittel, Antischaummittel, Pflegemittelzusatz, insbesondere in kosmetischen Formulierungen, textilen Formulierungen oder Formulierungen für natürliche oder künstliche Leder, als Textil- oder Fasermittelzusatz.

Die Verwendung der Zusammensetzung erfolgt durch Sprühen, Streichen, Rollen oder Rakeln. Vorteilhaft wird die Zusammensetzung in einer Menge von mehr als 50 g/m², insbesondere von mehr als 100 g/m² auf die Substratoberfläche aufgetragen, insbesondere auf die Betonoberfläche.

Die Erfindung wird anhand der folgenden Beispiele näher erläutert, die jedoch den Gegenstand der Erfindung nicht beschränken.

Methode zur Bestimmung des VOC-Gehaltes: Der nichtflüchtige-Anteil wurde gemäß ASTM D 5095-91 "Standard Test Method for Determination of the Nonvolatile Content in Silanes, Siloxanes and Silane-Siloxane Blends used in Masonry Water Repellents" bestimmt und der VOC-Gehalt gemäß ASTM D 3960 berechnet.

### Beispiele:

Alle nachfolgenden Angaben sind in Teilen und Gew.-% bezogen auf die gesamte Masse der Endformulierung.

### Beispiel 1

In einem 500 ml Laborrührreaktor mit Temperaturfühler, Tropftrichter und Rückflusskühler werden unter Stickstoffüberlagerung 200 g n-Octylmethyldichlorsilan vorgelegt und anschließend ein Gemisch aus 121 g Ethanol und 12,7 g Wasser bei 30 - 70 °C unter Normaldruck zudosiert. Das Gemisch wird ca. 1 h bei ca. 70°C unter leichtem Rückfluss gerührt. Anschließend wird unter Anlegen von Vakuum bis ca.
1 mbar und einer Sumpftemperatur unter 60 °C Ethanol abdestilliert. Man isoliert 157 g Produkt mit folgenden Eigenschaften:
Freies Ethanol : 0,1% (Masse)
Mittlere Molmasse: 766 g/mol
Viskosität (20°C): 22,1 mPa·s
VOC nach ASTM D 5095: 0 g/l, 1 g/l
Oligomerisierungsgrad: n*= 4, Cyclotetrasiloxan
0,8 mol H₂O/mol Si

### Beispiel 2

In einem 500 ml Laborrührreaktor mit Temperaturfühler, Tropftrichter und Rückflusskühler werden unter Stickstoffüberlagerung 200 g n-Octylmethyldichlorsilan vorgelegt und anschließend ein Gemisch aus 121 g Ethanol und 9,5 g Wasser bei 30 - 70 °C unter Normaldruck zudosiert. Das Gemisch wird ca. 1 h bei ca. 70°C unter leichtem Rückfluss gerührt. Anschließend wird unter Anlegen von Vakuum bis ca.
1 mbar und einer Sumpftemperatur unter 60 °C Ethanol abdestilliert. Man isoliert 172 g Produkt mit folgenden Eigenschaften:
Freies Ethanol : 0,1% (Masse)
Mittlere Molmasse:678 g/mol
Viskosität (20°C):9,0 mPa·s
VOC nach ASTM D 5095: 66 g/l
Oligomerisierungsgrad: n*=3,5
0,6 mol H₂O/mol Si

### Beispiel 3

In einem 500 ml Laborrührreaktor mit Temperaturfühler, Tropftrichter und Rückflusskühler werden unter Stickstoffüberlagerung 200 g n-Octylmethyldichlorsilan vorgelegt und anschließend ein Gemisch aus 121 g Ethanol und 7,9 g Wasser bei 30 - 70 °C unter Normaldruck zudosiert. Das Gemisch wird ca. 1 h bei ca. 70°C unter leichtem Rückfluss gerührt. Anschließend wird unter Anlegen von Vakuum bis ca.
1 mbar und einer Sumpftemperatur unter 60 °C Ethanol abdestilliert. Man isoliert 162 g Produkt mit folgenden Eigenschaften:
Freies Ethanol : 0,3% (Masse)
Mittlere Molmasse:640 g/mol
Viskosität (20°C):6,9 mPa·s
VOC nach ASTM D 5095: 72 g/l
Oligomerisierungsgrad: n*=3,3
0,5 mol H₂O/mol Si

### Beispiel 4

In einem 500 ml Laborrührreaktor mit Temperaturfühler, Tropftrichter und Rückflusskühler werden unter Stickstoffüberlagerung 78,6 g n-Propylmethyldichlorsilan vorgelegt und anschließen ein Gemisch aus 69 g Ethanol und 5,4 g Wasser bei 30 - 70 °C unter Normaldruck zudosiert. Das Gemisch wird ca. 1 h bei ca. 70°C unter leichtem Rückfluss gerührt. Anschließend wird unter Anlegen von Vakuum bis ca. 1 mbar und einer Sumpftemperatur unter 60 °C Ethanol abdestilliert.
Man isoliert 54,0 g Produkt mit folgenden Eigenschaften:
Mittlere Molmasse:544 g/mol
Viskosität (20°C):3,2 mPa·s
VOC nach ASTM D 5095: 332 g/l
Oligomerisierungsgrad: n* =4,6
0,6 mol H₂O/mol Si

### Beispiel 5

In einem 500 ml Laborrührreaktor mit Temperaturfühler, Tropftrichter und Rückflusskühler werden unter Stickstoffüberlagerung 85,5 g Isobutylmethyldichlorsilan vorgelegt und anschließen ein Gemisch aus 69 g Ethanol und 5,4 g Wasser bei 30 - 70 °C unter Normaldruck zudosiert. Das Gemisch wird ca. 1 h bei ca. 70°C unter leichtem Rückfluss gerührt. Anschließend wird unter Anlegen von Vakuum bis ca. 1 mbar und einer Sumpftemperatur unter 60 °C Ethanol abdestilliert.
Man isoliert 63,5 g Produkt mit folgenden Eigenschaften:
Mittlere Molmasse: 499 g/mol
Viskosität (20°C): 3,7 mPa·s
VOC nach ASTM D 5095: 324 g/l
Oligomerisierungsgrad: n*=3,6
0,6 mol H₂O/mol Si

### Beispiel 6

Eine Mischung aus 80 % oligomerem Octylmethylsiloxan aus Beispiel 1 (0,8 mol H₂O/mol Si) und 20 % oligomerem IBMDEO (0,6 mol H₂O/ mol Si) aus Beispiel 5 wurde eingesetzt. VOC nach ASTM D 5095: 76 g/l

### Beispiel 7

Eine Mischung aus 90 % oligomerem Octylmethylsiloxan aus Beispiel 1 (0,8 mol H₂O/mol Si) und 10 % IBTEO aus Beispiel 12 wurde eingesetzt.
VOC nach ASTM D 5095: 63 g/l

### Beispiel 8 - Vergleichsbeispiel

Oligomeres Octyltriethoxysilan aus Beispiel EP 0814110 B1
1,2 mol H₂O /mol Si

### Beispiel 9 - Vergleichsbeispiel

Oligomeres n-Propylsiloxan aus EP 1205481 B1
(0,8 mol H₂O/mol Si)

### Beispiel 10- Vergleichsbeispiel

Niederviskose Polydimethylsiloxan (dynamisch 20 mPa·s bei 25 °C) wurde eingesetzt.

### Beispiel 11 - Vergleichsbeispiel

n-Octyltriethoxysilan, ein lösungsmittelfreies, gebrauchsfertiges Hydrophobierungsmittel wurde eingesetzt.

### Beispiel 12 - Vergleichsbeispiel

Isobutyltriethoxysilan, ein lösungsmittelfreies, gebrauchsfertiges Hydrophobierungsmittel wurde eingesetzt.

### Beispiel 13 - Vergleichsbeispiel

n-Propyltriethoxysiloxan (1,1 mol H₂O/Si), ein lösungsmittelfreies Hydrophobierungsmittel wurde eingesetzt.

### Beispiel 14 - Vergleichsbeispiel

Bei Raumtemperatur wurde eine wässrige Emulsion eines Octyltriethoxysilan mit 50 Gew.-% Wirkstoff in einem sauberen, trockenen Glasgefäß vorgelegt und unten Rühren auf 20 % Wirkstoffkonzentration mit VE-Wasser verdünnt. Die entstandene Mischung wurde für weitere 10 Minuten gerührt und konnte anschließend direkt verwendet werden.

### Beispiel 15 - Vergleichsbeispiel

Bei Raumtemperatur wurde eine wässrige Emulsion eines Propyltriethoxysiloxans mit 50 Gew.-% Wirkstoff in einem sauberen, trockenen Glasgefäß vorgelegt und unten Rühren auf 10 % Wirkstoffkonzentration mit VE-Wasser verdünnt.

Die entstandene Mischung wurde für weitere 10 Minuten gerührt und konnte anschließend direkt verwendet werden.

### Auswertung der Beispiele

Die nachfolgende Tabelle 1 führt die Ergebnisse der oben angeführten Beispiele auf.

Dazu wurden die gebrauchsfertigen Zusammensetzungen auf Betonwürfel (Betonqualität gemäß EN 196 CEM I 42,5 R; w/z-Wert=0,5) der Abmessungen 5 x 5 x 5 cm mit der jeweils angegebenen Auftragsmenge durch tauchen der Würfeln behandelt. Die hydrophobierenden Eigenschaften werden durch die Reduktion der Wasseraufnahme der einzelnen Mischungen ausgedrückt. Nach einer Abbindezeit von 2 Wochen wurden die behandelten Würfel für 24 h vollständig unter Wasser gelagert. Anhaftende Feuchtigkeit wurde durch leichtes Abtupfen der Oberflächen mit einem Zellstofftuch entfernt. Anschließend wurde die Gewichtszunahme bestimmt. Die Reduktion der Wasseraufnahme, in Anlehnung an DIN EN 13580 ergibt sich im Vergleich zu einem unbehandelten Betonwürfel.

Zur Bestimmung der Eindringtiefe werden die behandelten Probekörper in zwei Teile gebrochen und die Bruchflächen jeweils mit einem wässrigen Farbsystem benetzt. Die nicht imprägnierte Zone wird gefärbt, während die imprägnierte Zone farblos bleibt. Gemessen wird die Breite der behandelten Oberfläche bis zur Farbgrenzfläche an acht verschiedenen Stellen des Probekörpers. Hieraus wird jeweils ein Mittelwert der Eindringtiefe (in mm) errechnet.

Der nichtflüchtige-Anteil wurde gemäß ASTM D 5095-91 "Standard Test Method for Determination of the Nonvolatile Content in Silanes, Siloxanes and Silane-Siloxane Blends used in Masonry Water Repellents" bestimmt und der VOC -Gehalt nach ASTM D 3960-04 berechnet.

### Bewertung Veränderung bzw. Abdunklung der Oberfläche: stark > leicht > gering > sehr gering>keine

**Tabelle 1: Ergebnisse der Ausprüfungen**

| **Mischung aus Beispiel** | **Auftrag* [g/m²]** | **VOC [g/l]** | **Reduktion der Wasseraufnahme [%]** | **Eindringtiefe [mm]** | **Veränderung bzw. Abdunklung der Oberfläche** |
|---|---|---|---|---|---|
| 1 | 113 | 0 | 40 | 2,4 | leicht |
| 2 | 120 | 66 | 92 | 2,6 | gering |
| 3 | 127 | 72 | 96 | 2,8 | sehr gering |
| 4 | 127 | 332 | 13,3 | 2,6 | leicht |
| 5 | 120 | 324 | 12,1 | 2,1 | leicht |
| 6 | 120 | 76 | 28,7 | 2,7 | leicht |
| 7 | 120 | 63 | 88,2 | 3,0 | gering |
| 8 | 113 | 66 | 96 | 2,0 | stark |
| 9 | 133 | 329 | 90 | 3,1 | leicht |
| 10 | 113 | 14 | 12 | 1,5 | stark |
| 11 | 167 | 344 | 97 | 4,7 | keine |
| 12 | 150 | 400 | 92 | 5,7 | keine |
| 13 | 100 | 128 | 93 | 2,0 | stark |
| 14 | 600** | 334 | 87,7 | 1,5 | keine |
| 15 | 1200*** | 397 | 23,7 | 0,9 | keine |

| | | | | | |
|---|---|---|---|---|---|
| ***-Einheitlich 4 Minuten tauchen in jeweiligen Produkt, ** und *** entsprechen ca. 120 g/L an Wirkstoff** | | | | | |

Die erfindungsgemäßen Zusammensetzungen zeigen sehr niedrige VOC-Werte, die bis zur unteren Bestimmungsgrenze der Methode reichen. Die gewünschten hydrophobierenden Eigenschaften bleiben dabei für die oligomeren Siloxane vergleichbar mit denen monomerer Alkylalkoxysilane, die jedoch sehr hohe VOC-Gehalte aufweisen.

Sehr gute Werte bei der Reduktion der Wasseraufnahme bei niedrigem VOC-Gehalten und zugleich guter Eindringtiefe und verminderter Veränderung der Oberflächenfarbe zeigt auch die Mischungen aus Beispiel 7.

## Patentansprüche

1. Zusammensetzung umfassend Dialkyl-funktionelle Siloxan-Oligomere
**dadurch gekennzeichnet,**
**dass** die Dialkyl-funktionellen Siloxan-Oligomere der allgemeinen Formel I entsprechen 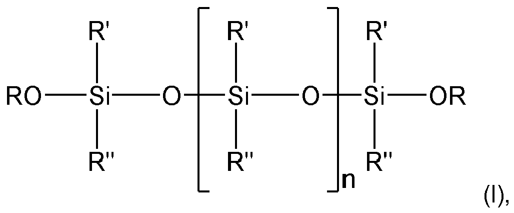 worin
R' jeweils unabhängig eine lineare, verzweigte oder cyclische Alkyl-Gruppe mit 3 bis 8 C-Atomen,
R" jeweils unabhängig eine Alkyl-Gruppe mit 1 bis 3 C-Atomen,
R jeweils unabhängig eine Alkyl-Gruppe mit 1 bis 3 C-Atomen, oder ein Wasserstoff ist, wobei die Gruppen R gleich oder verschieden sind, und
n gleich eine ganze Zahl von 0 bis 10 ist,
oder ein Gemisch von Dialkyl-funktionellen Siloxan-Oligomeren.

2. Zusammensetzung nach Anspruch 1,
**dadurch gekennzeichnet,**
**dass** in mindestens einem Dialkyl-funktionellen Siloxan-Oligomer der allgemeinen Formel I
R' eine lineare oder verzweigte Octyl-Gruppe, R" eine Methyl-Gruppe und
R eine Alkyl-Gruppe mit 1 bis 2 C-Atomen oder ein Wasserstoff sind, wobei die Gruppen R gleich oder verschieden sein können, mit n gleich eine ganze Zahl von 0 bis 10.

3. Zusammensetzung nach Anspruch 1 oder 2,
**dadurch gekennzeichnet,**
**dass** in mindestens einem Dialkyl-funktionellen Siloxan-Oligomer der allgemeinen Formel I R' ausgewählt ist aus Propyl-, n-Propyl-, i-Propyl-, Butyl-, iso-Butyl-, n-Butyl-, tert-Butyl-, n-Octyl-, 2-Methylheptyl-, 3-Methylheptyl-, 4-Methylheptyl-, 2,2-Dimethylhexyl-, 2,3-Dimethylhexyl-, 2,4-Dimethylhexyl-, 2,5-Dimethylhexyl-, 3,3-Dimethylhexyl-, 3,4-Dimethylhexyl-, 3-Ethylhexyl-, 2,2,3-Trimethylpentyl-, 2,2,4-Trimethylpentyl- (iso-Octyl-), 2,3,3-Trimethylpentyl-, 2,3,4-Trimethylpentyl-, 3-Ethyl-2-methylpentyl- und 3-Ethyl-3-methylpentyl-, 2,2,3,3-Tetramethylbutyl-, Cycloheptylethylen-, Methylcyclohexylmetylen-, Cycloheptylmethylen- und Methylcycloheptyl.

4. Zusammensetzung nach einem der Ansprüche 1 bis 3,
**dadurch gekennzeichnet,**
**dass** in mindestens einem Dialkyl-funktionellen Siloxan-Oligomer der allgemeinen Formel I R' ausgewählt ist aus n-Octyl-, iso-Butyl-, n-Propyl- und 2,2,4-Trimethylpentyl- (iso-Octyl-).

5. Zusammensetzung nach einem der Ansprüche 1 bis 4,
**dadurch gekennzeichnet,**
**dass** in der allgemeinen Formel I des mindestens einen Dialkyl-funktionellen Siloxan-Oligomer n gleich eine ganze Zahl von 1 bis 5 ist.

6. Zusammensetzung nach einem der Ansprüche 1 bis 5,
**dadurch gekennzeichnet,**
**dass** die Dialkyl-funktionellen Siloxan-Oligomere als Gemisch von Dialkyl-funktionellen linearen Siloxan-Oligomeren der allgemeinen Formel I vorliegen.

7. Zusammensetzung nach einem der Ansprüche 1 bis 5,
**dadurch gekennzeichnet,**
**dass** die Dialkyl-funktionellen Siloxan-Oligomere im Gemisch mit Dialkyl-funktionellen cyclischen Siloxan-Oligomeren der allgemeinen Formel II 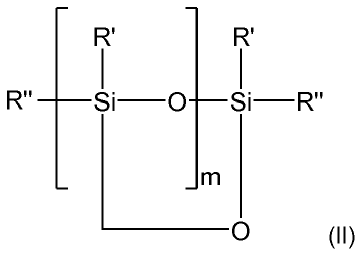 vorliegen, worin
R' jeweils unabhängig eine lineare, verzweigte oder cyclische Alkyl-Gruppe mit 3 bis 8 C-Atomen,
R" jeweils unabhängig eine Alkylgruppe mit 1 bis 3 C-Atomen, und
m gleich eine ganze Zahl von 2 bis 10 ist.

8. Zusammensetzung nach einem der Ansprüche 1 bis 7,
**dadurch gekennzeichnet,**
**dass** die Dialkyl-Siloxan-Oligomere der Formel I und II im molaren Verhältnis von 100 zu 1 bis 1 zu 100 vorliegen.

9. Zusammensetzung nach einem der Ansprüche 1 bis 8,
**dadurch gekennzeichnet,**
**dass** die Dialkyl-Siloxan-Oligomere der Formel I und optional der Formel II mit einem Gehalt von 0,01 bis 99,9 Gew.-% in der Zusammensetzung vorliegen.

10. Zusammensetzung nach einem der Ansprüche 1 bis 9,
**dadurch gekennzeichnet,**
**dass** die Zusammensetzung mindestens ein Organosilan oder -siloxan der allgemeinen Formel IV umfasst,
R¹-Si(O)_{y}R²_{z} (IV),
worin
R¹ eine lineare oder verzweigte Alkyl-Gruppe mit 3 bis 20 C-Atomen,
R² eine lineare oder verzweigte Alkoxy-Gruppe mit 1 bis 4 C-Atomen oder eine Hydroxy-Gruppe ist, wobei die Gruppen R² gleich oder verschieden sein können, mit
y gleich 0 bis 1,5,
z gleich 0, 1, 2 oder 3 und, wobei y = 1,5 bei z = 0, y = 1 bei z = 1, y = 0,5 bei z = 2 und y = 0 bei z = 3 sind, oder ein Gemisch daraus enthält.

11. Verfahren zur Herstellung von Zusammensetzungen nach einem der Ansprüche 1 bis 10 umfassend mindestens ein Dialkyl-funktionelles Siloxan-Oligomer der allgemeinen Formel I, indem
- mindestens ein Silan der allgemeinen Formel III
R'-SiR"(X)₂ (III),
worin
R' eine lineare oder verzweigte Alkyl-Gruppe mit 3 bis 8 C-Atomen,
R" eine Alkylgruppe mit 1 bis 3 C-Atomen sind, und
X jeweils unabhängig ausgewählt ist aus Halogen, -OR und -OH, wobei Gruppen R gleich oder verschieden sind und R eine Alkylgruppe mit 1 bis 2 C-Atomen ist,
- in Gegenwart eines Verdünnungsmittels oder Reaktionsmittel und einer definierten Menge Wasser bezogen auf die Silizium-Atome der Silane der Formel III hydrolysiert und kondensiert werden,
und optional
- das Verdünnungsmittel oder das Reaktionsmittel entfernt wird.

12. Verfahren nach Anspruch 11,
**dadurch gekennzeichnet,**
**dass** 0,3 bis 1,0 mol Wasser je Mol Silizium-Atome (mol H₂O/mol Si) der Silane der Formel III zugesetzt werden.

13. Verfahren nach Anspruch 11 oder 12,
**dadurch gekennzeichnet,**
**dass** das Verdünnungsmittel oder Reaktionsmittel ein Alkohol ist, insbesondere Methanol, Ethanol oder ein Gemisch enthaltend mindestens einen Alkohol.

14. Verfahren nach einem der Ansprüche 11 bis 13,
**dadurch gekennzeichnet,**
**dass** in dem mindestens einem Silan der Formel III X gleich Chlor ist.

15. Verfahren nach einem der Ansprüche 11 bis 13,
**dadurch gekennzeichnet,**
**dass** in dem mindestens einem Silan der Formel III X gleich -OR und/oder-OH ist, wobei die Gruppen R gleich oder verschieden sind und R eine Alkylgruppe mit 1 bis 2 C-Atomen ist.

16. Verfahren nach einem der Ansprüche 11 bis 15,
**dadurch gekennzeichnet,**
**dass** die Hydrolyse und/oder Kondensation in Gegenwart eines Katalysators erfolgt.

17. Verfahren nach einem der Ansprüche 11 bis 16,
**dadurch gekennzeichnet,**
**dass** die Hydrolyse und/oder Kondensation im Temperaturbereich von 25 bis 80 °C erfolgt und das Verdünnungsmittel und/oder Wasser im Vakuum bei einer Temperatur der Zusammensetzung, insbesondere einer Sumpftemperatur, kleiner gleich 70 °C aus der Zusammensetzung entfernt wird.

18. Verfahren nach einem der Ansprüche 11 bis 17,
**dadurch gekennzeichnet, dass** es die Schritte umfasst
- Vorlegen des mindestens einen Silans der allgemeinen Formel III,
-
a) Zugabe des Verdünnungsmittels oder Reaktionsmittels und des Wassers als ein Alkohol/Wasser-Gemisch oder
b) separate Zugabe des Verdünnungsmittels oder Reaktionsmittels Alkohol und Wasser
- Hydrolyse und/oder Kondensation im Temperaturbereich von 25 bis 80 °C, insbesondere für 20 Minuten bis 2 Stunden,
- Entfernen des Verdünnungsmittels oder Reaktionsmittels Alkohol und Wasser im Vakuum bei einer Temperatur der Zusammensetzung unter 65 °C, insbesondere einer Sumpftemperatur unter 65 °C,
- Erhalten der Zusammensetzung.

19. Verwendung einer Zusammensetzung umfassend mindestens ein Dialkyl-Siloxan-Oligomere der Formel II optional im Gemisch mit Siloxan-Oligomeren der Formel I und/oder Alkoxysilanen der Formel III zur Hydrophobierung von mineralischen Substraten.

20. Formulierung enthaltend eine Zusammensetzung nach einem der Ansprüche 1 bis 10 oder erhältlich nach einem Verfahren nach einem der Ansprüche 11 bis 18 oder 19 umfassend mindestens einen Hilfsstoff.

21. Verwendung der Zusammensetzung nach einem der Ansprüche 1 bis 10 oder erhältlich nach einem Verfahren nach einem der Ansprüche 11 bis 18 zur Hydrophobierung von Oberflächen von Substraten und zur Hydrophobierung von Materialien in der Masse, zur Hydrophobierung von mineralischen Baustoffen, zur Hydrophobierung von porösen mineralischen Substraten, vorzugsweise silikatischen Materialien, insbesondere Baustoffen wie Beton, Faserzement, Ton, Ziegel, Marmor, Granit, Sandstein oder Kalksandstein, zur Hydrophobierung von Ziegeln, Estrich, Putz, Gips, zur Hydrophobierung von silikatischen Kompositen, Keramik, natürlichen Baustoffen, Holz, Holzkomposite, Holzpolymere, als Additiv in Zusammensetzungen umfassend Polymere, in Lacken, Kompositmaterialien, zur Ausbildung von Wasser- oder Wasserdampfsperren, als Additiv in Mitteln zur Ausbildung von Wasserbarrieren, als Additiv in Klebstoffen zur Ausbildung von Wasser- und Dampfbarrieren, als Trockenmittel, Antischaummittel, Pflegemittelzusatz, insbesondere in kosmetischen Formulierungen, textilen Formulierungen oder Formulierungen für natürliche oder künstliche Leder, als Textil- oder Fasermittelzusatz.
